(19) Europäisches Patentamt
European Patent Office
Office européen des brevets

(11) **EP 3 741 515 A1**

(12) **EUROPÄISCHE PATENTANMELDUNG**

(43) Veröffentlichungstag:
**25.11.2020   Patentblatt 2020/48**

(51) Int Cl.:
**B25J 9/16** *(2006.01)*

(21) Anmeldenummer: **19175378.9**

(22) Anmeldetag: **20.05.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Huber, Gerold**
**81245 München (DE)**

(54) **VERFAHREN ZUM REGELN EINES ROBOTERS MIT EINEM SIMULIERTEN ROBOTER**

(57)    Die Erfindung betrifft e ine Vorrichtung und ein Verfahren, wobei ein physikalischer Roboter (303,509,627) mittels eines virtuellen Roboters (505,623,627) momentabhängig simuliert geregelt wird. Der virtuelle Roboter umfasst entsprechend einem physikalischen Roboter mehrere Gelenke und einen Endeffektor, wobei ein dynamisches Verhalten des virtuellen Roboters durch eine vorbestimmte Momentvektorabhängige Bewegungsgleichung beschrieben wird, bereitgestellt. Das dynamische Verhalten des virtuellen Roboters (505,623) wird durch eine momentvektorabhängige Bewegungsgleichung modelliert. Die daraus resultierenden Gelenkkoordinatenvektoren als Sollkoordinatenvektoren werden für einen physikalischen Roboter (303,509,627) verwendet, so dass der physikalische Roboter (303,509,627) den virtuellen Roboter (505,623) imitiert.

## FIG 5

EP 3 741 515 A1

**Beschreibung**

Die Erfindung betrifft ein Verfahren zum Regeln eines mehrere Gelenke und einen Endeffektor umfassenden physikalischen Roboters. Die Erfindung betrifft weiter eine Vorrichtung, ein Robotersystem, ein Computerprogramm und ein maschinenlesbares Speichermedium.

Hersteller von Robotern stellen in der Regel keine Schnittstelle für eine eigene, herstellerunabhängige momentbasierende Regelung des Roboters bereit.

Es besteht daher ein Bedarf für ein Konzept, welches es ermöglicht, erweiterte momentbasierte Regelungsstrategien über industriellen Standardschnittstellen zu ermöglichen. Die der Erfindung zugrunde liegende Aufgabe ist daher darin zu sehen, ein Konzept zum Regeln eines mehrere Gelenke und einen Endeffektor umfassenden physikalischen Roboters bereitzustellen, welches eine momentabhängige Regelung des Roboters herstellerunabhängig ermöglicht.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein Verfahren zum Regeln eines mehrere Gelenke und einen Endeffektor umfassenden physikalischen Roboters unter Verwendung eines virtuellen Roboters bereitgestellt, der entsprechend dem physikalischen Roboter mehrere Gelenke und einen Endeffektor umfasst, wobei ein dynamisches Verhalten des virtuellen Roboters durch eine vorbestimmte Momentvektor-abhängige Bewegungsgleichung beschrieben wird, umfassend die folgenden Schritte:

> Empfangen von Sollzustandssignalen, welche einen Sollzustand des physikalischen Roboters repräsentieren,
> Ermitteln eines Regelmomentvektors für die mehreren Gelenke des virtuellen Roboters, welcher notwendig ist, damit der Endeffektor des virtuellen Roboters den Sollzustand erreicht, Ermitteln eines Gelenkkoordinatenvektors des virtuellen Roboters bei an dem virtuellen Roboter angelegten ermittelten Regelmomentvektor,
> Ausgeben von Gelenkkoordinatenvektorsignalen, welche den ermittelten Gelenkkoordinatenvektor des virtuellen Roboters bei an dem virtuellen Roboter angelegten Regelmomentvektor repräsentieren, zum Regeln des physikalischen Roboters basierend auf dem ermittelten Gelenkkoordinatenvektor als ein Sollgelenkkoordinatenvektor.

Nach einem zweiten Aspekt wird eine Vorrichtung bereitgestellt, die eingerichtet ist, alle Schritte des Verfahrens nach dem ersten Aspekt auszuführen.

Nach einem dritten Aspekt wird ein Robotersystem bereitgestellt, umfassend einen physikalischen Roboter und die Vorrichtung nach dem zweiten Aspekt.

Nach einem vierten Aspekt wird ein Computerprogramm bereitgestellt, welches Befehle umfasst, die bei Ausführung des Computerprogramms durch einen Computer, beispielsweise durch die Vorrichtung nach dem zweiten Aspekt, diesen veranlassen, ein Verfahren gemäß dem ersten Aspekt auszuführen.

Nach einem fünften Aspekt wird ein maschinenlesbares Speichermedium bereitgestellt, auf dem das Computerprogramm nach dem vierten Aspekt gespeichert ist.

Die Erfindung basiert auf der Erkenntnis und schließt diese mit ein, dass die obige Aufgabe dadurch gelöst werden kann, dass ein virtueller Roboter definiert wird, welcher dem physikalischen Roboter hinsichtlich einer Anzahl an Gelenken und hinsichtlich des Endeffektors entspricht. Der virtuelle Roboter wird momentabhängig geregelt, wobei entsprechend der momentabhängigen Regelung ein Gelenkkoordinatenvektor für den virtuellen Roboter ermittelt wird. Der ermittelte Gelenkkoordinatenvektor wird ausgegeben, um basierend darauf den physikalischen Roboter zu steuern. Das heißt also, dass bei einer Steuerung des physikalischen Roboters basierend auf dem ermittelten Gelenkkoordinatenvektor des virtuellen Roboters der physikalische Roboter den virtuellen Roboter imitiert. Hierbei entspricht der Gelenkkoordinatenvektor des virtuellen Roboters einem Sollgelenkkoordinatenvektor für den physikalischen Roboter.

Somit besteht in vorteilhafter Weise eine hohe Flexibilität hinsichtlich der Verwendung von momentabhängigen Steuer- und Regelungsverfahren unter Verwendung der Sollpositionsschnittstelle des physikalischen Roboters. Eine von Herstellern meist nicht zur Verfügung gestellte offene Schnittstelle für Motormomente wird dabei nicht benötigt.

Der Vorteil in der Verwendung eines virtuellen Roboters ist weiter darin zu sehen, dass sein dynamisches Verhalten aufgrund der vorbestimmten Bewegungsgleichung vollständig bekannt ist. Unerwünschte Effekte wie z.B. Reibung und dynamische Kopplung können ausgeblendet werden. Hier ist in der Regel ein dynamisches Verhalten eines physikalischen Roboters eines Herstellers nicht bekannt, was eine direkte momentabhängige Regelung noch erschweren würde.

Somit wird insbesondere der technische Vorteil bewirkt, dass für einen physikalischer Roboter umfassend mehrere Gelenke und einen Endeffektor momentabhängige Steuer- und Regelungskonzepte angewandt werden können, ohne dass ein Hersteller des physikalischen Roboters eine offene Schnittstelle für eine solch momentabhängige Regelung bereitstellen muss.

Ein physikalischer Roboter ist ein realer Roboter.

Ein virtueller Roboter ist insbesondere ein simulierter Roboter.

Der Sollzustand wird zum Beispiel durch folgendes festgelegt bzw. definiert: Sollpose und/oder Sollkraft (oder Sollkräfte) bzw. Sollmoment(e) bezogen auf ein Weltkoordinatensystem, im Englischen auch "task space" genannt, und/oder Sollwinkel und/oder Sollmoment(e) bezogen auf ein Gelenkkoordinatensystem, im Englischen auch "joint space" genannt.

Das heißt also insbesondere, dass die Sollzustandssignale Sollposesignale umfassen können, welche die vorstehende Sollpose repräsentieren.

Das heißt also insbesondere, dass die Sollzustandssignale Sollkraftsignale umfassen können, welche die vorstehende Sollkraft repräsentieren.

Das heißt also insbesondere, dass die Sollzustandssignale Sollmomentsignale umfassen können, welche das/die vorstehende(n) Sollmoment(e) repräsentieren.

Das heißt also insbesondere, dass die Sollzustandssignale Sollwinkelsignale umfassen können, welche den vorstehenden Sollwinkel repräsentieren.

Gemäß einer Ausführungsform ist vorgesehen, dass das Ermitteln des Gelenkkoordinatenvektors ein Lösen der vorbestimmten Bewegungsgleichung abhängig von dem ermittelten Sollmomentvektor umfasst, so dass der Gelenkkoordinatenvektor einer Lösung der vorbestimmten Bewegungsgleichung entspricht.

Dadurch wird z.B. der technische Vorteil bewirkt, dass der Gelenkkoordinatenvektor aufgrund der im Allgemeinen einfacheren Bewegungsgleichungen des virtuellen Systems (, also des virtuellen Roboters,) effizient ermittelt werden kann.

Gemäß einer weiteren Ausführungsform ist vorgesehen, dass die vorbestimmte Bewegungsgleichung festlegt, dass eine zweifache zeitliche Ableitung des Gelenkkoordinatenvektors von dem Sollmomentvektor abhängt, insbesondere gleich dem Sollmomentvektor ist, so dass das Lösen der vorbestimmten Bewegungsgleichung eine zeitliche Doppelintegration des Regelmomentvektors umfasst.

Dadurch wird insbesondere der technische Vorteil bewirkt, dass die vorbestimmte Bewegungsgleichung effizient gelöst werden kann.

Insbesondere ist also vorgesehen, dass die vorbestimmte Bewegungsgleichung festlegt, dass eine zweifache zeitliche Ableitung des Gelenkkoordinatenvektors gleich dem Sollmomentvektor ist. Das heißt also, dass in diesem Fall die vorbestimmte Bewegungsgleichung gelöst wird, indem der Sollmomentvektor über die Zeit zweimal integriert wird.

Nach einer anderen Ausführungsform ist vorgesehen, dass Sollendeffektorkraftsignale empfangen werden, welche eine vom Endeffektor des physikalischen Roboters bereitzustellende Sollendeffektorkraft repräsentieren, wobei der Gelenkkoordinatenvektor des virtuellen Roboters basierend auf der Sollendeffektorkraft, und insbesondere basierend auf einer ausgewählten Regelungsstrategie, ermittelt wird.

Dadurch wird z.B. der technische Vorteil bewirkt, dass eine effiziente endeffektorkraftabhängige Regelung des physikalischen Roboters ermöglicht ist.

Gemäß einer Ausführungsform ist vorgesehen, dass Istendeffektormomentsignale empfangen werden, welche ein am Endeffektor des physikalischen Roboters gemessenes Istendeffektormoment repräsentieren, wobei der Gelenkkoordinatenvektor des virtuellen Roboters basierend auf dem Istendeffektormoment ermittelt wird.

Dadurch wird z.B. der technische Vorteil bewirkt, dass eine effiziente endeffektormomentabhängige Regelung des physikalischen Roboters ermöglicht ist.

Nach einer weiteren Ausführungsform ist vorgesehen, dass Regelungsstrategieauswahlsignale empfangen werden, welche eine oder mehrere zu verwendende Regelungsstrategien repräsentieren, wobei der Gelenkkoordinatenvektor des virtuellen Roboters basierend auf der zu verwendenden Regelungsstrategie ermittelt wird.

Dadurch wird z.B. der technische Vorteil bewirkt, dass der physikalische Roboter mit einer hybriden Regelungsstrategie, d.h. verschiedene Regelkonzepte in verschiedene orthogonale Richtungen, geregelt werden kann.

Eine Regelungsstrategie ist beispielsweise eine der folgenden Regelungsstrategien: positionsgesteuerte, schwerkraftkompensierende oder kraftgesteuerte Regelungsstrategie.

Gemäß einer weiteren Ausführungsform ist vorgesehen, dass der physikalische Roboter basierend auf dem ermittelten Gelenkkoordinatenvektor gesteuert wird.

Dadurch wird z.B. der technische Vorteil bewirkt, dass der physikalische Roboter effizient gesteuert werden kann.

Gemäß einer Ausführungsform ist vorgesehen, dass das Verfahren nach dem ersten Aspekt mittels der Vorrichtung nach dem zweiten Aspekt ausgeführt oder durchgeführt wird.

Vorrichtungsmerkmale ergeben sich analog aus entsprechenden Verfahrensmerkmalen und umgekehrt.

Das heißt also insbesondere, dass sich technische Funktionalitäten der Vorrichtung nach dem zweiten Aspekt aus entsprechenden technischen Funktionalitäten des Verfahrens nach dem ersten Aspekt und umgekehrt ergeben.

Eine vorbestimmte Bewegungsgleichung ist gemäß einer Ausführungsform von folgender Form:

$$T_{ctrl} = M_{vir}(q_{vir})\ddot{q}_{vir} + g_{vir}(q_{vir}, \dot{q}_{vir})$$

Hierbei bezeichnet $q_{vir}$ den Gelenkkoordinatenvektor des virtuellen Systems. $\dot{q}_{vir}$ bezeichnet die erste zeitliche Ableitung des Gelenkkoordinatenvektors. $\ddot{q}_{vir}$ bezeichnet die zweite zeitliche Ableitung des Gelenkkoordinatenvektors. $T_{ctrl}$ bezeichnet das wirkende Eingangsmoment. $M_{vir}$ bezeichnet die Trägheitsmatrix des virtuellen Systems. $g_{vir}$ bezeichnet einen nichtlinearen Term, welcher z.B. folgende Kräfte berücksichtigt: Eulerkräfte, Corioliskräfte, Gravitationskräfte, Reibungskräfte. Alle Größen beziehen sich auf das virtuelle System, also auf den virtuellen Roboter.

In einer Ausführungsform ist vorgesehen, dass die Trägheitsmatrix als Einheitsmatrix festgelegt oder definiert ist. Das heißt also, dass der Term $M_{vir}(q_{vir}) = 1$ ist.

Nach einer Ausführungsform ist vorgesehen, dass der Term $g_{vir}(q_{vir}, \dot{q}_{vir}) = 0$ ist. Das heißt also, dass die vorstehend bezeichneten Kräfte im virtuellen System nicht auftreten bzw. dass eine Kopplung zwischen den einzelnen Gelenken des virtuellen Roboters nicht vorhanden ist.

Unter diesen beiden vorstehend bezeichneten Voraussetzungen reduziert sich also die vorstehend bezeichnete Bewegungsgleichung zu:

$$\ddot{q}_{vir} = T_{ctrl}$$

Allgemein ergibt sich der Gelenkkoordinatenvektor $\boldsymbol{q_{vir}}$ entsprechend der vorbezeichneten allgemeinen Bewegungsgleichung wie folgt:

$$q_{vir} = \iint \ddot{q}_{vir}\, dt^2$$

Bei der Verwendung der vorstehend bezeichneten vereinfachten Bewegungsgleichung $\ddot{q}_{vir} = T_{ctrl}$ ergibt sich der Gelenkkoordinatenvektor $q_{vir}$ wie folgt:

$$q_{vir} = \iint T_{ctrl}\, dt^2$$

Das heißt also, dass in diesem Fall die vorbestimmte Bewegungsgleichung gelöst wird, indem der Sollmomentvektor über die Zeit zweimal integriert wird.

In einer Ausführungsform ist der Term

$$g_{vir}(q_{vir}, \dot{q}_{vir})$$

ungleich Null.

In dieser Ausführungsform werden also zum Beispiel eine oder mehrere der folgenden Kräfte berücksichtigt: Eulerkraft, Corioliskraft, Gravitationskraft, Reibungskraft.

In einer Ausführungsform ist vorgesehen, dass

$$g_{vir}(q_{vir}, \dot{q}_{vir}) = D_{vir} * \dot{q}_{vir},$$

wobei $D_{vir}$ eine vorbestimmte positive diagonale Dämpfungsmatrix ist.

Durch das Berücksichtigen der vorstehenden Kräfte, insbesondere der Reibungskraft mittels der Dämpfungsmatrix, wird insbesondere der technische Vorteil bewirkt, dass eine Stabilität in der Regelung effizient verbessert werden kann.

Gemäß einer Ausführungsform ist vorgesehen, dass das Istendeffektormoment mittels einer roboterinternen Sensorik und/oder mittels einer roboterexternen Sensorik gemessen wird.

In einer Ausführungsform ist vorgesehen, dass der physikalische Roboter (physikalisches System) basierend auf dem ermittelten Gelenkkoordinatenvektor des virtuellen Roboters (virtuelles System) geregelt wird.

Das Verfahren nach dem ersten Aspekt ist gemäß einer Ausführungsform ein computerimplementiertes Verfahren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

FIG 1 ein Ablaufdiagramm eines Verfahrens zum Regeln eines mehrere Gelenke und einen Endeffektor umfassenden physikalischen Roboters,

FIG 2 eine Vorrichtung,

FIG 3 ein Robotersystem,

FIG 4 ein maschinenlesbares Speichermedium,

FIG 5 ein erstes Blockdiagramm, welches beispielhaft das hier beschriebene Konzept zum Regeln eines physikalischen Roboters näher erläutert, und

FIG 6 ein zweites Blockdiagramm, welches das hier beschriebene Konzept zur Regelung eines physikalischen Roboters in einer detaillierteren, beispielhaften Ausführung näher erläutert,

zeigen.

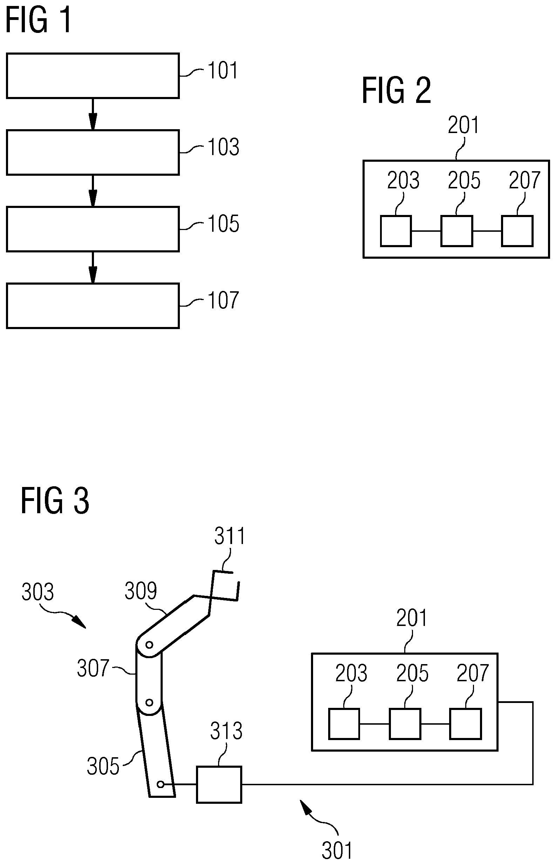

FIG 1 zeigt ein Ablaufdiagramm eines Verfahren zum Regeln eines mehrere Gelenke und einen Endeffektor umfassenden physikalischen Roboters unter Verwendung eines virtuellen Roboters, der entsprechend dem physikalischen Roboter mehrere Gelenke und einen Endeffektor umfasst, wobei ein dynamisches Verhalten des virtuellen Roboters durch eine vorbestimmte Momentvektor-abhängige Bewegungsgleichung beschrieben wird, bereitgestellt, umfassend die folgenden Schritte:

Empfangen 101 von Sollzustandssignalen, welche einen Sollzustand des physikalischen Roboters repräsentieren,

Ermitteln 103 eines Regelmomentvektors für die mehreren Gelenke des virtuellen Roboters, welcher notwendig ist, damit der Endeffektor des virtuellen Roboters den Sollzustand erreicht,

Ermitteln 105 eines Gelenkkoordinatenvektors des virtuellen Roboters bei an dem virtuellen Roboter angelegten ermittelten Regelmomentvektor,

Ausgeben 107 von Gelenkkoordinatenvektorsignalen, welche den ermittelten Gelenkkoordinatenvektor des virtuellen Roboters bei an dem virtuellen Roboter angelegten Regelmomentvektor repräsentieren, zum Regeln des physikalischen Roboters basierend auf dem ermittelten Gelenkkoordinatenvektor als ein Sollgelenkkoordinatenvektor.

FIG 2 zeigt eine Vorrichtung 201.

Die Vorrichtung 201 ist eingerichtet, alle Schritte des Verfahrens nach dem ersten Aspekt auszuführen.

Die Vorrichtung 201 umfasst einen Eingang 203, welcher eingerichtet ist, die vor- und/oder nachstehend beschriebenen Sollzustandssignale zu empfangen.

Die Vorrichtung 201 umfasst weiter einen Prozessor 205, welcher eingerichtet ist, die vor- und/oder nachstehend beschriebenen Schritte des Ermittelns eines Regelmomentvektors und des Ermittelns eines Gelenkkoordinatenvektors durchzuführen. Das heißt also, dass der Prozessor 205 eingerichtet ist, den vor- und/oder nachstehend beschriebenen Regelmomentvektor und den vor- und/oder nachstehend beschriebenen Gelenkkoordinatenvektor zu ermitteln.

Die Vorrichtung 201 umfasst weiter einen Ausgang 207, welcher eingerichtet ist, die vor- und/oder nachstehend beschriebenen Gelenkkoordinatenvektorsignale auszugeben.

Allgemein werden Signale, wie vor- und/oder nachstehend beschrieben, mittels des Eingangs 203 gemäß einer Ausführungsform empfangen. Das heißt also insbesondere, dass der Eingang 203 eingerichtet ist, die vor- und/oder nachstehend beschriebenen entsprechenden Signale zu empfangen.

Signale, welche ausgegeben werden, werden insbesondere mittels des Ausgangs 207 ausgegeben. Der Ausgang 207 ist also entsprechend eingerichtet, die entsprechenden Signale auszugeben.

FIG 3 zeigt ein Robotersystem 301.

Das Robotersystem 301 umfasst einen physikalischen Roboter 303 und die Vorrichtung 201 gemäß FIG 2.

Der Roboter 303 umfasst ein erstes Gelenk 305, ein zweites Gelenk 307 und ein drittes Gelenk 309. Die drei Gelenke 305, 307, 309 sind gelenkig miteinander verbunden. In einer nicht gezeigten Ausführungsform sind mehr oder weniger als drei Gelenke vorgesehen. In einer nicht gezeigten Ausführungsform sind translatorische Gelenke vorgesehen und/oder es werden parallele und/oder Lambda-Kinematiken berücksichtigt.

Am dritten Gelenk 309 ist ein Endeffektor 311 angeordnet, welcher beispielhaft, wie in FIG 3 gezeichnet, ein 2-Finger-Greifer ist. In einer nicht gezeigten Ausführungsform ist anstelle oder zusätzlich zum 2-Finger-Greifer ein anderer Endeffektor vorgesehen, beispielsweise ein Mehr-Finger-Greifer, ein Vakuum-Greifer oder ein beliebiger Werkzeugadapter.

Der Roboter 303 umfasst weiter eine Roboterregelungseinrichtung 313. Die Roboterregelungseinrichtung 313 ist eingerichtet, basierend auf einem Sollgelenkkoordinatenvektor die drei Gelenke 305, 307, 309 steuern, derart, dass sich die drei Gelenke 305, 307, in die dem Sollgelenkkoordinatenvektor entsprechende Sollpose bewegen.

Hierfür ist z.B. vorgesehen, dass der Ausgang 207 mit der Roboterregelungseinrichtung 313 verbunden ist, sodass der ermittelte Gelenkkoordinatenvektor für den virtuellen Roboter als Sollgelenkkoordinatenvektor an die Roboterregelungseinrichtung 313 ausgegeben werden kann.

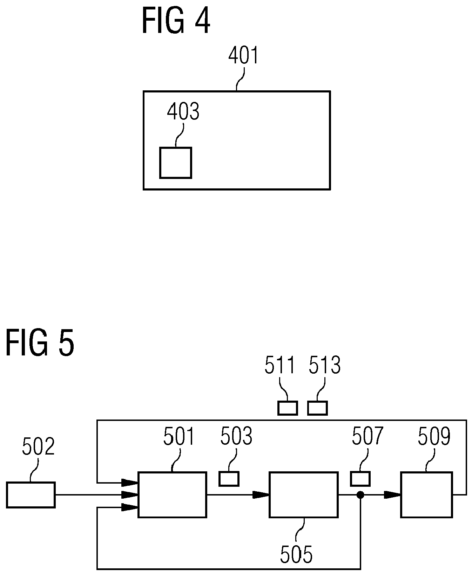

FIG 4 zeigt ein maschinenlesbares Speichermedium 401.

Auf dem maschinenlesbaren Speichermedium 401 ist ein Computerprogramm 403 gespeichert. Das Computerprogramm 403 umfasst Befehle, die bei Ausführung des Computerprogramms 403 durch einen Computer diesen veranlassen, ein Verfahren gemäß dem ersten Aspekt auszuführen.

FIG 5 zeigt ein erstes Blockdiagramm, welches beispielhaft das hier beschriebene Konzept zum Steuern eines mehrere Gelenke und einen Endeffektor umfassenden physikalischen Roboters erläutert.

Gemäß dem beispielhaften Blockdiagramm gemäß FIG 5 ist eine Regelungseinrichtung 501 vorgesehen, welche Sollzustandssignale 502 als auch Istposesignale des virtuellen Systems 507 und Istsignale des physikalischen Systems 511 und 513 empfängt. Basierend auf diesen Sollzustandssignalen 502 ermittelt die Regelungseinrichtung 501 einen entsprechenden Regelmomentvektor 503.

Der Regelmomentvektor 503 wird einem Block 505 zugeführt, welcher basierend auf dem Regelmomentvektor 503 und einer vorbestimmten Moment-abhängigen Bewegungsgleichung einen Gelenkkoordinatenvektor für einen virtuellen Roboter ermittelt, der entsprechend dem physikalischen Roboter mehrere Gelenke und einen Endeffektor umfasst und an welchem der ermittelte Regelmomentvektor 503 anliegt.

Der Block 505 steht also für den virtuellen Roboter, also für ein virtuelles System.

Der Gelenkkoordinatenvektor 507 für den virtuellen Roboter wird dann an den physikalischen Roboter 509 ausgegeben, wobei der physikalische Roboter 509 den ermittelten Gelenkkoordinatenvektor 507 als ein Sollgelenkkoordinatenvektor verwendet. Zusätzlich dient 507 als Istposesignal für die Regelungseinrichtung 501.

Der physikalische Roboter 509 imitiert also ein Verhalten des virtuellen Roboters.

Das vom Endeffektor des physikalischen Roboters 509 bereitgestellte Istendeffektormoment kann beispielsweise mittels einer robotereigenen (roboterinternen) Sensorik und/oder mittels einer roboterexternen Sensorik gemessen werden.

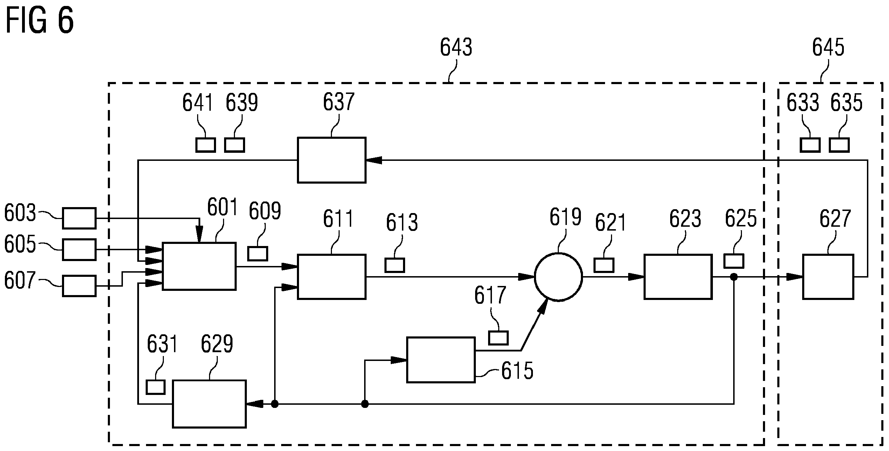

FIG 6 zeigt ein zweites Blockdiagramm des hier beschriebenen Konzepts zum Regeln eines mehrere Gelenke umfassenden physikalischen Roboters.

Analog zu dem ersten Blockdiagramm gemäß FIG 5 ist auch gemäß dem in FIG 6 beschriebenen Blockdiagramm eine Regelungseinrichtung 601 vorgesehen.

Die Regelungseinrichtung 601 empfängt Regelungsstrategieauswahlsignale 603, welche im Allgemeinen eine zu verwendende Regelungsstrategie in beliebige, orthogonale Richtungen repräsentieren.

Eine Regelungsstrategie ist beispielsweise eine der folgenden Regelungsstrategien: positionsgesteuert, schwerkraftkompensierend, kraftgesteuert.

Die Regelungseinrichtung 601 empfängt weiter Sollendeffektorkraftsignale, welche eine vom Endeffektor des physikalischen Roboters bereitzustellende Sollendeffektorkraft repräsentieren.

Weiter empfängt die Regelungseinrichtung 601 Sollposesignale 607, welche eine Sollpose des Endeffektors des physikalischen Roboters repräsentieren.

Die Regelungseinrichtung 601 ermittelt basierend auf diesen Signalen einen nominellen Beschleunigungsvektor 609, welcher einem Block 611 zugeführt wird. Der Block 611 führt eine Dynamikinvertierung basierend auf dem nominellen Beschleunigungsvektor 609 und dem virtuellen Gelenkkoordinatenvektor 625 durch und gibt entsprechend einen nominellen Sollmomentvektor 613 aus.

Weiter ist im Falle redundanter Roboterkinematiken eine Nullraum-Regelungseinrichtung 615 vorgesehen, welche einen Nullraum-Regelmomentvektor 617 ausgibt.

Der nominelle Regelmomentvektor 613 und der Nullraum-Regelmomentvektor 617 werden einem Block 619 zugeführt, welcher beide zugeführten Regelmomentvektoren addiert, um der Summe entsprechend einen Regelmomentvektor 621 auszugeben.

Der Regelmomentvektor 621 wird einem Block 623 zugeführt, welcher analog zu dem ersten Blockdiagramm gemäß FIG 5 für einen virtuellen Roboter steht, dessen dynamisches Verhalten durch eine vorbestimmte Momentvektor-abhängige Bewegungsgleichung beschrieben wird und an welchem der Sollmomentvektor 621 anliegt.

Durch das entsprechende Integrieren der vorbestimmten Bewegungsgleichung wird ein entsprechender virtueller Gelenkkoordinatenvektor 625 ermittelt, welcher an einen physikalischen Roboter 627 als ein Sollgelenkkoordinatenvektor ausgegeben wird.

Der physikalische Roboter 627 imitiert somit den virtuellen Roboter 623.

Ein Istgelenkkoordinatenvektor 633 und ein Istendeffektormoment 635 des physikalischen Roboters 627 werden einem Block 637 bereitgestellt, gemäß welchem eine Vorwärtskinematik basierend auf diesen Werten berechnet wird, um eine Istpose 641 und eine Istendeffektorkraft des physikalischen Roboters 639 zu ermitteln.

Diese beiden letzten Werte werden der Regelungseinrichtung 601 zur Verfügung gestellt, welche dann basierend auf diesen Werten weiter mit der Regelung fortfahren kann und basierend darauf einen weiteren nominellen Beschleunigungsvektor ermitteln kann.

Weiter wird der virtueller Gelenkkoordinatenvektor 625 einem Block 629 bereitgestellt, welcher eine Vorwärtskinematik für den Gelenkkoordinatenvektor 625 berechnet, um eine virtuelle Istpose 631 des virtuellen Roboters 623 zu ermitteln.

Diese Istpose des virtuellen Roboters wird ebenfalls der Regelungseinrichtung 601 zur Verfügung gestellt. Die Regelungseinrichtung 601 ist insbesondere kein sequentieller Ablauf, die stoppt und fortfährt, sondern vorzugsweise konstant getaktet.

Die Berechnung der inversen Dynamik gemäß dem Block 611 und auch die Nullraum-Regelungseinrichtung 615 verwenden den virtuelle Gelenkkoordinatenvektor 625 anstelle des Istgelenkkoordinatenvektors 633 des physikalischen Roboters 627 für eine interne Berechnung der Jacobimatrix

$$J(q_{vir}) = \frac{\partial \dot{z}_{vir}}{\partial \dot{q}_{vir}}$$

Ein gestrichelt dargestelltes Viereck mit dem Bezugszeichen 643 soll symbolisch bedeutet, dass die Blöcke 601, 611, 615, 619, 623, 629 und 637 innerhalb des Vierecks 643 in Software realisiert sein können.

Ein weiteres gestrichelt dargestelltes Viereck mit dem Bezugszeichen 645 soll symbolisch bedeuten, dass der darin enthaltene Block 627, welcher den physikalischen Roboter symbolisch darstellen soll, als Hardware ausgeführt ist.

Die beiden Vierecke 643 und 645 sollen also symbolisch illustrieren, welche Funktionen bzw. was in Software und welche Funktionen bzw. was als Hardware ausgeführt werden können.

Zusammenfassend basiert das hier beschriebene Konzept auf der Verwendung eines virtuellen Roboters, dessen dynamisches Verhalten durch eine vorbestimmte Momentvektor-abhängige Bewegungsgleichung beschrieben wird.

Das dynamische Verhalten des virtuellen Roboters ist somit bekannt.

Somit wird dieser momentabhängig geregelt, wobei die daraus resultierenden Gelenkkoordinatenvektoren als Sollgelenkkoordinatenvektoren für einen physikalischen Roboter verwendet werden, sodass der physikalische Roboter den virtuellen Roboter imitieren kann bzw. imitiert.

Somit können in vorteilhafter Weise erweiterte momentbasierte Regelungskonzepte wie die oben erläuterte Hybride Regelung mit Nullraumdynamik auf einen physikalischen Roboter mit herstellerüblichen Positionsregelungsschnittstelle angewandt werden.

Das Konzept weist weiter den Vorteil auf, dass eine Schwerkraft und Reibungskompensation weiter durch eine interne Roboterregelungseinrichtung durchgeführt werden kann, was weiter in vorteilhafter Weise die Entwicklung einer externen Regelungseinrichtung vereinfacht. Im Falle einer im physikalischen Roboter internen, steifen Gelenkspositionsregelung mit hohen Reglerverstärkungen, konvergiert die Systemdynamik zum virtuellen System. Das heißt, das physikalische System (physikalischer Roboter) imitiert das virtuelle System (virtueller Roboter) exakt.

Die Entkopplung des physikalischen Systems (physikalischer Roboter) erlaubt insbesondere in vorteilhafter Weise die Regelung eines womöglich reibungsfrei gewählten, virtuellen Systems (virtueller Roboter).

Da der physikalische Roboter das virtuelle System mit gegebenenfalls hohen internen Regelverstärkungen imitieren kann, können Reibungsmomente mit entsprechend hoher Güte von der internen Roboterregelung in vorteilhafter Weise überwunden werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

**1.** Verfahren zum Regeln eines mehrere Gelenke (305, 307, 309) und einen Endeffektor (311) umfassenden physikalischen Roboters (303) unter Verwendung eines virtuellen Roboters (505, 623), der entsprechend dem physikalischen Roboter (303) mehrere Gelenke und einen Endeffektor umfasst, wobei ein dynamisches Verhalten des virtuellen Roboters (505, 623) durch eine vorbestimmte Momentvektorabhängige Bewegungsgleichung beschrieben wird, umfassend die folgenden Schritte:

Empfangen (101) von Sollzustandssignalen, welche einen Sollzustand des physikalischen Roboters (303) repräsentieren,
Ermitteln (103) eines Regelmomentvektors für die mehreren Gelenke des virtuellen Roboters (505, 623), welcher notwendig ist, damit der Endeffektor des virtuellen Roboters (505, 623) den Sollzustand erreicht,
Ermitteln (105) eines Gelenkkoordinatenvektors des virtuellen Roboters (505, 623) bei an dem virtuellen Roboter (505, 623) angelegten ermittelten Regelmomentvektor,
Ausgeben (107) von Gelenkkoordinatenvektorsignalen, welche den ermittelten Gelenkkoordinatenvektor des virtuellen Roboters (505, 623) bei an dem virtuellen Roboter (505, 623) angelegten Regelmomentvektor repräsentieren, zum Regeln des physikalischen Roboters (303) basierend auf dem ermittelten Gelenkkoordinatenvektor als ein Sollgelenkkoordinatenvektor.

**2.** Verfahren nach Anspruch 1, wobei das Ermitteln des Gelenckoordinatenvektors (507, 625) ein Lösen der vorbestimmten Bewegungsgleichung abhängig von dem ermittelten Sollmomentvektor (503, 621) umfasst, so dass der Gelenkkoordinatenvektor (507, 625) einer Lösung der vorbestimmten Bewegungsgleichung entspricht.

**3.** Verfahren nach Anspruch 2, wobei die vorbestimmte Bewegungsgleichung festlegt, dass eine zweifache zeitliche Ableitung des Gelenkkoordinatenvektors (507, 625) von dem Sollmomentvektor (503, 621) abhängt, insbesondere gleich dem Sollmomentvektor (503, 621) ist, so dass das Lösen der vorbestimmten Bewegungsgleichung eine zeitliche Doppelintegration des Regelmomentvektors umfasst.

**4.** Verfahren nach einem der vorherigen Ansprüche, wobei Sollendeffektorkraftsignale (605) empfangen werden, welche eine vom Endeffektor des physikalischen Roboters (303) bereitzustellende Sollendeffektorkraft repräsentieren, wobei der Gelenkkoordinatenvektor (507, 625) des virtuellen Roboters (505, 623) basierend auf der Sollendeffektorkraft ermittelt wird.

**5.** Verfahren nach einem der vorherigen Ansprüche, wobei Istendeffektormomentsignale empfangen werden, welche ein am Endeffektor des physikalischen Roboters (303) gemessenes Istendeffektormoment repräsentieren, wobei der Gelenkkoordinatenvektor des virtuellen Roboters (505, 623) basierend auf dem Istendeffektormoment ermittelt wird.

**6.** Verfahren nach einem der vorherigen Ansprüche, wobei Regelungsstrategieauswahlsignale (603) empfangen werden, welche eine oder mehrere zu verwendende Regelungsstrategien repräsentieren, wobei der Gelenkkoordinatenvektor (507, 625) des virtuellen Roboters (505, 623) basierend auf der zu verwendenden Regelungsstrategie ermittelt wird.

**7.** Verfahren nach einem der vorherigen Ansprüche, wobei der physikalische Roboter (303) basierend auf dem ermittelten Gelenkkoordinatenvektor (507, 625) des virtuellen Roboters (505, 623) geregelt wird.

**8.** Vorrichtung (201), die eingerichtet ist, alle Schritte des Verfahrens nach einem der vorherigen Ansprüche auszuführen.

**9.** Robotersystem (301), umfassend einen physikalischen Roboter (303) und die Vorrichtung (201) nach Anspruch 8.

10. Computerprogramm, umfassend Befehle, die bei Ausführung des Computerprogramms durch einen Computer diesen veranlassen, ein Verfahren gemäß einem der Ansprüche 1 bis 7 auszuführen.

11. Maschinenlesbares Speichermedium, auf dem das Computerprogramm nach Anspruch 10 gespeichert ist.

# FIG 1

```
┌─────────────────────────┐
│                         │──── 101
└─────────────────────────┘
            │
            ▼
┌─────────────────────────┐
│                         │──── 103
└─────────────────────────┘
            │
            ▼
┌─────────────────────────┐
│                         │──── 105
└─────────────────────────┘
            │
            ▼
┌─────────────────────────┐
│                         │──── 107
└─────────────────────────┘
```

# FIG 2

201

203    205    207

# FIG 3

303    309    311

307

305    313

201

203    205    207

301

FIG 4

401

403

FIG 5

511 513

502

501 503 507 509

505

# FIG 6

EP 3 741 515 A1

Europäisches Patentamt

European Patent Office

Office européen des brevets

## EUROPÄISCHER RECHERCHENBERICHT

Nummer der Anmeldung

EP 19 17 5378

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2007/073442 A1 (AGHILI FARHAD [CA]) 29. März 2007 (2007-03-29) * Absatz [0010] - Absatz [0024] * * Absatz [0050] - Absatz [0173] * ----- | 1-11 | INV. B25J9/16 |
| X | WO 2017/198299 A1 (ABB SCHWEIZ AG [CH]) 23. November 2017 (2017-11-23) * Seite 2, Zeile 8 - Seite 4, Zeile 26 * * Seite 5, Zeile 7 - Seite 11, Zeile 24 * ----- | 1-11 | |

RECHERCHIERTE SACHGEBIETE (IPC)

B25J
G05B

Der vorliegende Recherchenbericht wurde für alle Patentansprüche erstellt

| Recherchenort | Abschlußdatum der Recherche | Prüfer |
|---|---|---|
| Den Haag | 13. Dezember 2019 | Patsiopoulos, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 17 5378

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2019

| Im Recherchenbericht angeführtes Patentdokument | Datum der Veröffentlichung | Mitglied(er) der Patentfamilie | Datum der Veröffentlichung |
|---|---|---|---|
| US 2007073442 A1 | 29-03-2007 | KEINE | |
| WO 2017198299 A1 | 23-11-2017 | KEINE | |

EPO FORM P0461

Für nähere Einzelheiten zu diesem Anhang : siehe Amtsblatt des Europäischen Patentamts, Nr.12/82